# EUROPÄISCHE PATENTSCHRIFT

(11) **EP 3 277 629 B1**
(45) Veröffentlichungstag und Bekanntmachung des Hinweises auf die Patenterteilung: **03.06.2020**
(21) Anmeldenummer: 17715457.2
(22) Anmeldetag: 03.04.2017
(51) Int. Cl.: C01B 33/107, C07F 7/20

(54) **VERFAHREN ZUR ABTRENNUNG VON ALUMINIUMCHLORID AUS SILANEN**
PROCESS FOR SEPARATING ALUMINUM CHLORIDE FROM SILANES
PROCÉDÉ DE SÉPARATION DE CHLORURE D'ALUMINIUM DE SILANES

(30) Priorität: 12.04.2016 DE 102016206090
(43) Veröffentlichungstag der Anmeldung: 07.02.2018
(73) Patentinhaber: Wacker Chemie AG, 81737 München (DE)
(72) Erfinder: BOCKHOLT, Andreas, 80805 München (DE); MAUTNER, Konrad, 84489 Burghausen (DE)
(74) Vertreter: Fritz, Helmut
(86) Internationale Anmeldenummer: PCT/EP2017/057883
(87) Internationale Veröffentlichungsnummer: WO 2017/178268

(56) Entgegenhaltungen:
- EP-A1- 2 930 178
- EP-A1- 2 930 232
- DE-A1- 10 157 198
- DE-A1-102007 002 536

## Beschreibung

Die Erfindung betrifft ein Verfahren zur Abtrennung von Aluminiumchlorid aus Silanflüssigkeit durch Bildung einer Ionischen Flüssigkeit aus Aluminiumchlorid mit einer Stickstoff- oder Phosphorverbindung.

Das im Müller-Rochow-Prozess hergestellte Silangemisch wird als Rohsilan bezeichnet. Es enthält eine gewisse Menge an Aluminiumverbindungen, welche im weiteren Aufarbeitungsprozess stören und in den Anlagen zu unerwünschten Ablagerungen und Folgereaktionen führt. Bisher ist beschrieben (CS 147515), dass Aluminiumchlorid über die Reaktion mit Natriumchlorid abgefangen werden kann. Diese Reaktion ist jedoch nur in der Gasphase bei hohen Temperaturen ausreichend schnell und für hohen Massendurchsatz nicht geeignet. Auch kann die Konzentration an Aluminiumverbindungen in Silanen durch Polymere mit Amingruppen (DE 102009027729 A1), Vinylpyridin-Copolymere (DE 2852598), Polymerharze ohne funktionelle Gruppen wie z.B. Amberlyte XAD-4® oder Tonmineralien wie Montmorillonit K 10 TM gesenkt werden (WO 2009049944 A1). Die verwendeten Polymere und Polymerharze sind allerdings sehr teuer und für Prozesse mit einem hohen Massendurchsatz sind sie nur wenig geeignet.

DE 10157198 A1 beschreibt ein Verfahren bei dem ein Silangemisch aus der Müller-Rochow-Direktsynthese, das überschüssiges Aluminiumchlorid enthält, mit verschiedenen Imidazoliniumchloriden und zusätzlichem Aluminiumchlorid umgesetzt wird. Eine ionische Flüssigkeit wird gebildet und das Aluminiumchlorid löst sich in dieser ionischen Flüssigkeit. Dann wird das Silangemisch isoliert.

EP 2930178 A1 beschreibt ein Verfahren zur Destillation eines Silangemischs aus der Müller-Rochow-Direktsynthese, das überschüssiges Aluminiumchlorid enthält in Anwesenheit eines Amins oder Nitrils. Aluminiumchlorid wird dabei komplexiert und der Dampfdruck so abgesenkt, dass Aluminiumchlorid leichter abgetrennt werden kann.

Gegenstand der Erfindung ist ein Verfahren zur Abtrennung von Aluminiumchlorid aus Silanflüssigkeit, bei dem in einem ersten Schritt Aluminiumchlorid enthaltende Silanflüssigkeit mit Verbindung N, ausgewählt aus Harnstoff, Thioharnstoff, Methylimidazoliumchlorid und 1-Ethyl-2-Methylimidazoliumchlorid, vermischt wird, wobei aus dem Aluminiumchlorid und Verbindung N eine Ionische Flüssigkeit gebildet wird, und in einem zweiten Schritt die Ionische Flüssigkeit von der gereinigten Silanflüssigkeit abgetrennt wird.

Es wurde gefunden, dass Ionische Flüssigkeiten in Silanen, insbesondere im Rohsilan praktisch unlöslich sind. Das Aluminiumchlorid reagiert mit Verbindung N unter Bildung einer Ionischen Flüssigkeit. Es bilden sich dabei zwei flüssige Phasen aus: Die Phase der Silanflüssigkeit und die Phase der Ionischen Flüssigkeit.

Die Silanflüssigkeit enthält vorzugsweise Silane der allgemeinen Formel 1

RₐH_{b}SiCl_{4-a-b} (1) ,

in der
- **R**: einen Alkylrest mit 1 bis 6 Kohlenstoffatomen oder Phenylrest,
- **a**: die Werte 0, 1, 2, 3 oder 4 und
- **b**: die Werte 0, 1 oder 2
bedeuten.

Vorzugsweise bedeutet R einen Methylrest.
In einer bevorzugten Ausführungsform bedeutet **a** die Werte 1, 2 oder 3. Vorzugsweise bedeutet **b** die Werte 0 oder 1.

In einer anderen bevorzugten Ausführungsform bedeutet **a** den Wert 0. Vorzugsweise bedeutet b die Werte 1 oder 2.

Eine besonders bevorzugte Silanflüssigkeit ist das im Müller-Rochow-Prozess hergestellte Silangemisch, das als Rohsilan bezeichnet wird.

Die Silanflüssigkeit und/oder die Verbindung N können Lösungsmittel, insbesondere aprotisches Lösungsmittel enthalten. Vorzugsweise beträgt die Menge an Lösungsmittel höchstens 100 Gew.-%, bevorzugt höchstens 20 Gew.-%, insbesondere höchstens 1 Gew.-%, bezogen auf die eingesetzte Aluminiumchlorid enthaltende Silanflüssigkeit.

Beispiele für Lösungsmittel sind aprotische Lösungsmittel, vorzugsweise lineare oder cyclische, gesättigte oder ungesättigte Kohlenwasserstoffe, z.B. Pentan, Cyclohexan, Toluol, Ether wie Methyl-tert-butylether, Anisol, Tetrahydrofuran oder Dioxan, Halogenkohlenwasserstoffe, wie Dichlormethan, 1,2-Dichlorethan oder Chlorbenzol, Nitrile wie Acetonitril oder Propionitril, oder DMSO.

Die eingesetzte Aluminiumchlorid enthaltende Silanflüssigkeit enthält vorzugsweise höchstens 10 Gew.-%, insbesondere 1 Gew.-% Lösungsmittel. In einer Ausführungsform enthält die eingesetzte Aluminiumchlorid enthaltende Silanflüssigkeit Chlorkohlenwasserstoffe. Die Chlorkohlenwasserstoffe können als Nebenprodukte beim Müller-Rochow-Prozess entstehen.

Die Verbindung N wird vorzugsweise ausgewählt aus Harnstoffverbindung, Thioharnstoffverbindung, Aminverbindung, Amidverbindung, Phosphoniumsalzverbindung, Pyridinverbindung und Imidazoliumsalzverbindung und Gemischen davon.

Als Harnstoffverbindung sind Harnstoff und alkylierte Harnstoffe bevorzugt, wobei mindestens ein Wasserstoffatom an einem der Stickstoffatome vorhanden ist.

Als Thioharnstoffverbindung sind Thioharnstoff und alkylierte Thioharnstoffe bevorzugt, wobei mindestens ein Wasserstoffatom an einem der Stickstoffatome vorhanden ist.

Als Aminverbindung sind primäre und sekundäre Amine mit C1-C10-Alkylresten bevorzugt. Die Aminverbindungen sind vorzugsweise bei Verfahrensbedingungen flüssig oder fest.
Besonders bevorzugt sind sekundäre aliphatische Amine.

Als Amidverbindung sind monomere Carbonsäureamide bevorzugt. Die Amidverbindungen sind am Stickstoffatom vorzugsweise monosubstituiert oder unsubstituiert.

Als Phosphoniumsalzverbindung sind vierfach mit C1-C10-Alkylresten oder Phenylresten substituierte Phosphoniumsalze bevorzugt. Die Phosphoniumsalzverbindungen sind vorzugsweise bei Verfahrensbedingungen flüssig oder fest.
Als Pyridinverbindung sind Pyridin und N-Alkylpyridiniumsalze mit einem C1-C10-Alkylrest bevorzugt.

Die Imidazoliumsalzverbindungen sind Salze der 1,3- Diazole. Sie sind vorzugsweise unsubstituiert oder an einem oder beiden Stickstoffatomen mit je einem C1-C10-Alkylrest substituiert. Besonders bevorzugt sind Methylimidazoliumchlorid, 1-Ethyl-2-Methyl-imidazoliumchlorid, 1-Ethyl-3-methyl-imidazoliumchlorid und 1-Butyl-3-methyl-imidazoliumchlorid.

Wenn die Verbindung N eine Salzverbindung ist dann weist sie vorzugsweise das Chloridion als Anion auf.

Vorzugsweise werden pro 1 Gewichtsteil Aluminiumchlorid in der Silanflüssigkeit 2 bis 100, insbesondere 5 bis 50 Gewichtsteile Verbindung N eingesetzt.

Im ersten Verfahrensschritt wird die Mischung aus Aluminiumchlorid enthaltende Silanflüssigkeit mit Verbindung N vorzugsweise bewegt, insbesondere gerührt.

Der erste Verfahrensschritt wird vorzugsweise bei einem Druck von 500 hPa bis 2000 hPa, insbesondere von 900 hPa bis 1200 hPa durchgeführt.

Der erste Verfahrensschritt wird vorzugsweise bei einer Temperatur von 0°C bis 50°C, besonders bevorzugt bei 10°C bis 40°C, insbesondere bei 15°C bis 30°C durchgeführt.

In einer bevorzugten Ausführungsform hat die Phase der Ionischen Flüssigkeit eine größere Dichte als die Phase der Silanflüssigkeit. In diesem Fall können die Phasen durch Ablassen getrennt werden.

In einer weiteren bevorzugten Ausführungsform ist die Verbindung N bei Verfahrenstemperatur fest. In diesem Fall haftet die Ionische Flüssigkeit an der nicht umgesetzten Verbindung N an und die Phasen können durch Dekantieren getrennt werden.

Alle vorstehenden Symbole der vorstehenden Formeln weisen ihre Bedeutungen jeweils unabhängig voneinander auf. In allen Formeln ist das Siliciumatom vierwertig. Die Summe aller Bestandteile der Reaktionsmischung ergeben 100 Gew.-%.

In den folgenden Beispielen sind, falls jeweils nicht anders angegeben, alle Mengen- und Prozentangaben auf das Gewicht bezogen und alle Drücke 0,10 MPa (abs.).

Sofern nicht anders angegeben, wurden die nachstehenden Beispiele bei Raumtemperatur, also bei 23°C durchgeführt.

### Beispiel 1

Es werden 909,88 g Rohsilan mit 68,60 g Harnstoff in einem Glaskolben gerührt. Nach den in der Tabelle I angegebenen Kontaktzeiten werden Proben der Rohsilanphase genommen und der Aluminiumgehalt des gereinigten Rohsilans mittels ICP-AES (Inductively Coupled Plasma - Atomemissionsspektroskopie, Gerät: Optima 7300 DV, Fa. Perkin Elmer) bestimmt. Der Aluminiumgehalt des gereinigten Rohsilans nimmt stetig ab.

**Tabelle I: Abnahme des Aluminiumgehalts im gereinigten Rohsilan in Abhängigkeit von der Kontaktzeit beim Rühren mit Harnstoff.**

| Zeit [min] | Al [mg/kg] |
|---|---|
| 0 | 170 |
| 5 | 97 |
| 10 | 86 |
| 15 | 77 |
| 20 | 63 |
| 25 | 52 |
| 30 | 40 |
| 35 | 32 |
| 40 | 25 |
| 45 | 18 |
| 60 | 10 |
| 75 | 6 |
| 90 | 4 |
| 120 | <3 |

### Beispiel 2

Es werden 200,17 g Rohsilan mit 13,03 g 1-Ethyl-2-Methylimidazoliumchlorid in einem Glaskolben gerührt. Nach den in der Tabelle II angegebenen Kontaktzeiten werden Proben der Rohsilanphase genommen und der Aluminiumgehalt des gereinigten Rohsilans mittels ICP-AES (Inductively Coupled Plasma - Atomemissionsspektroskopie, Gerät: Optima 7300 DV, Fa. Perkin Elmer) bestimmt. Der Aluminiumgehalt des gereinigten Rohsilans nimmt stetig ab.

**Tabelle II: Abnahme des Aluminiumgehalts im gereinigten Rohsilan in Abhängigkeit von der Kontaktzeit beim Rühren mit 1-Ethyl-2-Methyl-imidazoliumchlorid.**

| Zeit [min] | Al [mg/kg] |
|---|---|
| 0 | 160 |
| 5 | 30 |
| 10 | 25 |
| 15 | 22 |
| 20 | 24 |
| 25 | 19 |
| 30 | 20 |
| 35 | 22 |
| 40 | 20 |
| 35 | 16 |
| 60 | 21 |
| 75 | 20 |
| 90 | 16 |
| 120 | 19 |

### Beispiel 3

Es werden 200,14 g Rohsilan mit 10,04 g Methylimidazoliumchlorid in einem Glaskolben gerührt. Nach den in der Tabelle III angegebenen Kontaktzeiten werden Proben der Rohsilanphase genommen und der Aluminiumgehalt des gereinigten Rohsilans mittels ICP-AES (Inductively Coupled Plasma - Atomemissionsspektroskopie, Gerät: Optima 7300 DV, Fa. Perkin Elmer) bestimmt. Der Aluminiumgehalt des gereinigten Rohsilans nimmt stetig ab.

**Tabelle III: Abnahme des Aluminiumgehalts im gereinigten Rohsilan in Abhängigkeit von der Kontaktzeit beim Rühren mit Methylimidazoliumchlorid.**

| Zeit [min] | Al [mg/kg] |
|---|---|
| 0 | 160 |
| 5 | 27 |
| 10 | 21 |
| 15 | 18 |
| 20 | 19 |
| 25 | 17 |
| 30 | 16 |
| 35 | 16 |
| 40 | 17 |
| 35 | 17 |
| 60 | 17 |
| 75 | 17 |
| 90 | 17 |
| 120 | 18 |

Nach allen Versuchen werden neben der Abnahme des Aluminiumgehalts keine Veränderungen der Zusammensetzung des Rohsilans beobachtet.

## Patentansprüche

1. Verfahren zur Abtrennung von Aluminiumchlorid aus Silanflüssigkeit, bei dem
in einem ersten Schritt Aluminiumchlorid enthaltende Silanflüssigkeit mit Verbindung N, ausgewählt aus Harnstoff, Thioharnstoff, Methylimidazoliumchlorid und 1-Ethyl-2-Methyl-imidazoliumchlorid, vermischt wird, wobei aus dem Aluminiumchlorid und Verbindung N eine Ionische Flüssigkeit gebildet wird,
und in einem zweiten Schritt die Ionische Flüssigkeit von der gereinigten Silanflüssigkeit abgetrennt wird.

2. Verfahren nach Anspruch 1, bei dem die Silanflüssigkeit Silane der allgemeinen Formel 1
RₐH_{b}SiCl_{4-a-b} (1) ,
enthält, in der
**R** einen Alkylrest mit 1 bis 6 Kohlenstoffatomen oder Phenylrest,
**a** die Werte 0, 1, 2, 3 oder 4 und
**b** die Werte 0, 1 oder 2 bedeuten.

3. Verfahren nach einem oder mehreren der vorangehenden Ansprüche, bei dem die Silanflüssigkeit im Müller-Rochow-Prozess hergestelltes Rohsilan ist.

4. Verfahren nach einem oder mehreren der vorangehenden Ansprüche, bei dem pro 1 Gewichtsteil Aluminiumchlorid in der Silanflüssigkeit 2 bis 100 Gewichtsteile Verbindung N eingesetzt werden.

5. Verfahren nach einem oder mehreren der vorangehenden Ansprüche, bei dem der erste Verfahrensschritt bei einer Temperatur von 0°C bis 50°C durchgeführt wird.

## Claims

1. Process for separating aluminium chloride from silane liquid, wherein,
in a first step, silane liquid containing aluminium chloride is mixed with compound N selected from among urea, thiourea, methylimidazolium chloride and 1-ethyl-2-methylimidazolium chloride, forming an ionic liquid from the aluminium chloride and compound N, and, in a second step, the ionic liquid is separated from the purified silane liquid.

2. Process according to Claim 1, wherein the silane liquid contains silanes of the general formula 1
RₐH_{b}SiCl_{4-a-b} (1),
where
**R** is an alkyl radical having from 1 to 6 carbon atoms or a phenyl radical,
**a** is 0, 1, 2, 3 or 4 and
**b** is 0, 1 or 2.

3. Process according to one or more of the preceding claims, wherein the silane liquid is crude silane produced in the Müller-Rochow process.

4. Process according to one or more of the preceding claims, wherein from 2 to 100 parts by weight of compound N are used per one part by weight of aluminium chloride in the silane liquid.

5. Process according to one or more of the preceding claims, wherein the first process step is carried out at a temperature of from 0°C to 50°C.

## Revendications

1. Procédé pour la séparation de chlorure d'aluminium de liquide de silane, dans lequel
dans une première étape, du liquide de silane contenant du chlorure d'aluminium est mélangé avec un composé N, choisi parmi l'urée, la thiourée, le chlorure de méthylimidazolium et le chlorure de 1-éthyl-2-méthyl-imidazolium, un liquide ionique étant formé à partir du chlorure d'aluminium et du composé N,
et dans une deuxième étape, le liquide ionique est séparé du liquide de silane purifié.

2. Procédé selon la revendication 1, dans lequel le liquide de silane contient des silanes de formule générale 1
RₐH_{b}SiCl_{4-a-b} (1) ,
dans laquelle
R signifie un radical alkyle comportant 1 à 6 atome(s) de carbone ou un radical phényle,
a signifie les valeurs 0, 1, 2, 3 ou 4 et
b signifie les valeurs 0, 1 ou 2.

3. Procédé selon l'une ou plusieurs des revendications précédentes, dans lequel le liquide de silane est un silane brut préparé dans le procédé Müller-Rochow.

4. Procédé selon l'une ou plusieurs des revendications précédentes, dans lequel, pour 1 partie en poids de chlorure d'aluminium dans le liquide de silane, 2 à 100 parties en poids de composé N sont utilisées.

5. Procédé selon l'une ou plusieurs des revendications précédentes, dans lequel la première étape de procédé est mise en œuvre à une température de 0 °C à 50 °C.
